# EUROPÄISCHE PATENTSCHRIFT

(11) **EP 2 351 646 B1**
(45) Veröffentlichungstag und Bekanntmachung des Hinweises auf die Patenterteilung: **07.11.2012**
(21) Anmeldenummer: 10014919.4
(22) Anmeldetag: 07.08.2007
(51) Int. Cl.: B32B 27/08, B32B 27/32, B32B 27/34, B32B 27/36, B29C 47/00

(54) **Mehrschichtige flächen- oder schlauchförmige Nahrungsmittelhülle oder -folie**
Multilayer sheet- or tube-shaped food casing or food film
Feuille multicouche, planiforme ou tubulaire, pour denrées alimentaires

(30) Priorität: 07.08.2006 DE 102006036844
(43) Veröffentlichungstag der Anmeldung: 03.08.2011
(62) Teilanmeldung aus: 07801535.1
(73) Patentinhaber: KUHNE ANLAGENBAU GmbH, 53757 St. Augustin/Menden (DE)
(72) Erfinder: Schiffmann, Jürgen, 53773 Hennef (DE)
(74) Vertreter: Kopp, Stephan

(56) Entgegenhaltungen:
- EP-A- 1 749 655
- WO-A-01/03922
- DE-A1- 10 227 580
- JAMES D. STOBIE: "Producing Coextruded High Barrier Heat-Shrinkable Packaging Films", PAPER, FILM & FOIL CONVERTER, [Online] 1. Oktober 2003 (2003-10-01), XP002456925, ISSN: 0031-1138 Gefunden im Internet: URL:http://pffc-online.com/the_place/paper _producing_coextruded_high> [gefunden am 2007-10-10]

## Beschreibung

Die vorliegende Erfindung betrifft eine mehrschichtige, im Düsenblasverfahren hergestellte und im Tripple-Bubble-Verfahren biaxial verstreckte, flächen- oder schlauchförmige Nahrungsmittelhülle oder -folie, insbesondere für Lebensmittelverpackungen, wie beispielsweise Schrumpfbeutel, Siegelfolien, Einschlagfolien oder dergleichen, nach dem Oberbegriff des Anspruchs 1.

In der Praxis werden derartige mehrschichtige schlauch- oder flächenförmige Verpackungsfolien bereits als 5- oder 7-schichtige Folie eingesetzt.

So beschreibt beispielsweise die EP 0 236 099 B2 eine kurz als Verpackungssauerstoffsperrfilm bezeichnete, mehrschichtige, schlauchförmige Verpackungsfolie für Lebensmittel mit bis zu 7 Schichten. Nachteilig ist bei der beschriebenen Folie, daß die Außenschicht aus einem Polyolefin (kurz: PO) besteht, welches zwar die inneren Schichten gut vor Feuchtigkeit schützt, aber keine deutlich höhere Temperaturbeständigkeit gegenüber der Innenschicht (Siegelschicht) aufweist.

Die EP 0 476 836 B1 diskutiert eine 6-schichtige Verpackungsfolie, welche demgegenüber zwar eine temperaturbeständige Außenschicht (PET) enthält, aber die Kernschichten für die Sauerstoffbarriere und die mechanische Festigkeit (EVOH / PA) werden nicht durch eine gesonderte, reine PO-Schicht vor Feuchtigkeit geschützt, da weder PET noch HV (Haftvermittler) diesen Ansprüchen an die Wasserdampfbarriere genügen.

Ferner wird die EVOH-Schicht nicht zwischen zwei PA-Schichten gebettet (Sandwich), was zusätzlich unterstützt durch die fehlende äußere PO-Schicht zu sehr starker Rollneigung (Curling) nach Außen führt.

Die EP 1 034 076 B1 diskutiert eine kurz als heißschrumpffähige thermoplastische Mehrschichtfolie bezeichnete Verpackungsfolie mit temperaturbeständiger Außenschicht (PA). Hierbei handelt es sich allerdings lediglich um eine 5-schichtige Struktur, welche absolut asymetrisch aufgebaut ist, und ebenfalls keinerlei PO-Schicht als Wasserdampfbarriere von Außen aufweist. Daher kommt es hierbei erst recht zu sehr starker Rollneigung bei gleichzeitig stark beeinträchtigter Wasserdampfbarriere wie auch stark beeinträchtigter Festigkeit, da das EVOH und das PA der Feuchtigkeit schutzlos ausgesetzt sind.

Die PCT/EP2004/051560, veröffentlicht als WO 2005/011978 A1 beschreibt eine 5-schichtige Verpackungsfolie mit einer temperaturbeständigen Außenschicht (PET) und einer Kernschicht aus EVOH für eine gute Sauerstoffbarriere. Aber auch hier ist keine Feuchtigkeitsbarriere von Außen vorgesehen. Darüber hinaus handelt es sich um ein komplett anderes Herstellungsverfahren. Die beschriebenen Folien werden nicht im Blasfolienprozeß mit biaxialer Verstreckung (Tripple-Bubble-Prozeß), sondern im davon grundlegend unterschiedlich ausgestalteten Flachfolienprozeß mit biaxialer Verstreckung (Tenderframe-Prozeß) hergestellt.

In der DE 102 54 172 A1 und in der DE 102 27 580 A1 von der selben Anmelderin werden ebenfalls ähnliche Aufbauten 7-schichtiger Verpackungsfolien beschrieben, zum einen mit PO in der Außenschicht als Wasserdampfbarriere oder zum anderen mit PET in der Außenschicht als temperaturbeständige Schicht. Aber mit nur maximal sieben zur Verfügung stehenden Schichten ist eine optimale Lösung, d.h. temperaturbeständige Außenschicht, Einbettung der Sauerstoffbarriere und Trägerschichten (EVOH + PA) in eine äußere und eine innere feuchtigkeitsabweisende Schicht, sowie symmetrische Anordnung der Wasserdampf- und Sauerstoffbarriere als auch Trägerschichten nicht realisierbar.

Dementsprechend ist es Aufgabe der vorliegenden Erfindung - unter Verrneidung der vorstehend diskutierten Nachteile - eine gattungsgemäße mehrschichtige flächen- oder schlauchförmige Nahrungsmittelhülle oder -folie derart weiterzubilden, daß eine ausreichend dichte Sauerstoffbarriere bei einer zugleich hohen Wasserdampfbarriere bei hervorragender mechanischer Festigkeit zur Verfügung gestellt werden kann.

Ein weiterer Aspekt der Erfindung ist es, einer solche mehrschichtige flächen- oder schlauchförmige Nahrungsmittelhülle oder -folie derart weiterzubilden, daß ferner ausgezeichnete optische Eigenschaften, eine gute Weiterverarbeitbarkeit, eine hohe Temperaturbeständigkeit der Außenschicht und eine zufriedenstellende Schrumpfrate gewährleistet werden können.

Diese Aufgabe und Aspekte werden gelöst durch die Merkmale der Ansprüche 1 und 2.

Erfindungsgemäß wird hierbei eine im Düsenblasverfahren hergestellte und im Tripple-Bubble-Verfahren biaxial verstreckte, mehrschichtige flächen- oder schlauchförmige Nahrungsmittelhülle oder -folie, insbesondere für Lebensmittelverpackungen, wie beispielsweise Schrumpffolien, Siegelfolien, Einschlagfolien oder dergleichen, vorgeschlagen, die sich erstmals durch folgende, von außen nach innen gezählte Schichtaufbauten mit erstmalig wenigstens neun Schichten auszeichnet.

Dabei enthält die erste Schicht von außen als Schichtbestandteil PET, die zweite Schicht einen Haftvermittler, die dritte ein Polyolefin, vorzugsweise Polyethylen, die vierte Schicht einen Haftvermittler, die fünfte Schicht Polyamid, die sechste Schicht ein PVOH oder MXD6, die siebte Schicht Polyamid, die achte Schicht einen Haftvermittler, und die neunte Schicht von außen, die zugleich die innerste Schicht ist, ein Polyolefin vorzugsweise Polyethylen.

Das PA ermöglicht die Sicherstellung der gewünschten mechanischen Eigenschaften. Durch das Polyester können hervorragende optische Eigenschaften wie Glanz und Transparenz sichergestellt sowie eine hohe Weiterverarbeitungsgeschwindigkeit (Taktzahlen) durch die hohe Temperaturbeständigkeit erzielt werden.

Mit dem PO wird die benötigte Wasserdampfbarriere erreicht und es kann positiv auf die Siegelbarkeit der Innenschicht eingewirkt werden, d.h. es wird eine hohe Siegelnahtfestigkeit bei möglichst niedriger Siegeltemperatur erzielbar. Durch den gezielt möglichst symmetrischen Aufbau der Träger- und Barriereschichten (PO/PA/PVOH) wird im Idealfall gleichzeitig die Rollneigung eliminiert oder in bestimmten Fällen wenigstens auf ein akzeptables Minimum reduziert.

Dabei umfassen die Polyolefine sowohl PE als auch EVA und EM(M)A im Sinne dieser Anmeldung sowie Mischungen von Polyolefinen als solchen als auch mit Ionomeren.

Weiterhin steht EVA gleichsam für EVA als auch für Mischungen von EVA mit Polymeren, Ionomeren oder EM(M)A. Die Haftvermittler (kurz: HV) stehen für eine Klebeschicht. Ferner steht PA allgemein für PA sowie für PA6, PA66, PA 6/66, PA 6/12 oder dergleichen als auch für Mischungen hiervon sowie für Mischungen von PA mit anderen Polymeren.

Dabei wird in vorteilhafter Weise eine Nahrungsmittelhülle- oder folie für Lebensmittelverpackungen geschaffen, mit der alternativ ein gezielt hoher Schrumpf von bis zu 60 % oder demgegenüber ein gezielt niedriger Schrumpf von bis zu 0 % möglich ist.

Für Schrumpfbeutel oder dergleichen ist mit den erstmalig vorgeschlagenen Schichtaufbauten in vorteilhafter Weise ein besonders hoher Schrumpf erzielbar, der wenigstens 20 % bis 60 %, vorzugsweise wenigstens 30 % bis 50 %, beträgt, gemessen bei einer Wassertemperatur von etwa 90°C.

Für Siegelfolien oder dergleichen ist mit den erstmalig vorgeschlagenen Schichtaufbauten in vorteilhafter Weise ein besonders niedriger Schrumpf erzielbar, der höchstens 0 % bis 30 % vorzugsweise 2 % bis 5%, beträgt, gemessen bei einer Wassertemperatur von etwa 90°C.

Für Einschlagfolien oder dergleichen ist mit den erstmalig vorgeschlagenen Schichtaufbauten in vorteilhafter Weise ein besonders niedriger Schrumpf erzielbar, der höchstens 0 % bis 5 % vorzugsweise 0 % bis 2%, beträgt, gemessen bei einer Wassertemperatur von etwa 90°C.

Für die bei Schrumpfbeuteln bzw. Siegelfolien und Einschlagfolien vorzusehenden Siegelschichten auf der Innenseite kann bei den erstmalig vorgeschlagenen Schichtaufbauten vorteilhaft als Rohstoff beispielsweise ein Polyolefin, vorzugsweise mit LDPE, LLDPE, EVA, EM(M)A, Ionomere oder POP oder Mischungen hiervon oder dergleichen vorgesehen werden.

Aufgrund der durch den Schichtbestandteil PVOH erzielten, besonders ausgeprägten Sauerstoffbarriere ist eine hervorragende Haltbarkeit der damit verpackten Lebensmittel über mehrere Wochen ohne jegliche Qualitätsminderung gewährleistet.

Dank der extrem gut ausgebildeten Sauerstoffbarriere steht mit der erfindungsgemäßen Nahrungsmittelhülle oder -folie erstmals eine Lebensmittelverpackung zur Verfügung, mit der auch besonders luftempfindliche Güter selbst bei langen Lagerzeiten keiner farblichen Veränderung unterzogen sind oder gar Gefahr laufen, durch Eintritt von Sauerstoff zu altern oder Ihren Geschmack oder deren Aroma zu verändern.

So wird der Schichtbestandteil PVOH bei einem bevorzugten Schichtaufbau ähnlich einem Sandwich zwischen zwei Schichten mit Polyamid als Schichtbestandteil eingebettet, was zu einer möglichst hohen Sauerstoffbarriere führt und zugleich eine hervorragende Einbettung und Stabilisierung der EVOH-Schicht zwischen den beiden Polyamid-Schichten als Trägerschichten gewährleistet.

Da die Barriereeigenschaften von PVOH und auch PA durch Feuchtigkeit negativ beeinträchtigt werden können, ist auch hier ein sandwichartiger Schichtaufbau, d.h. die Einbettung der PVOH und PA-Schichten zwischen zwei Polyolefin-Schichten als Wasserdampfbarriere von innen und außen bevorzugt.

Damit steht eine hervorragende Wasserdampfbarriere zur Verfügung, was insbesondere bei Fleisch oder anderen Lebensmitteln, die frischhaltebedürftig sind, entscheidend ist. Mit der erfindungsgemäßen Nahrungsmittelhülle oder -folie verpackte Lebensmittel bleiben deshalb besonders lange frisch.

Aufgrund der niedrigen Wasserdampfdurchlässigkeit bleiben die Gewichtsverluste beim Lagern der Lebensmittel und insbesondere beim Lagern von Fleisch besonders gering.

Die äußerste Schicht der erstmalig vorgeschlagenen Nahrungsmittelhülle oder - folie besteht aus hochtemperaturbeständigen Rohstoffen, wie PET, und bietet somit die Möglichkeit die Folien mit extrem hohen Temperaturen zu verschweißen, ohne daß die Folie mit den Schweißbalken verklebt. Hierdurch lassen sich höhere Taktzahlen auf den Schweißmaschinen erzielen. Darüber hinaus ist die Folie wesentlich unempfindlicher gegen äußerliche Beschädigungen und hat, wie für PET üblich, hervorragende optische Eigenschaften in Bezug auf Glanz und Transparenz. Ferner ist die Folie besonders gut beschrift- oder bedruckbar.

Weiter lässt sich die erfindungsgemäße Nahrungsmittelhülle oder -folie besonders gut mit entsprechenden Anlagen der selben Anmeldering herstellen und weiterverarbeiten.

Vorteilhafte Aspekte oder Weiterbildungen der Erfindung ergeben sich aus den Merkmalen der Unteransprüche.

So ist es bei einer bevorzugten Ausführungsform der erfindungsgemäßen Nahrungsmittelhülle oder -folie für Lebensmittelverpackungen vorgesehen, daß Schichten, die Polyethylen als Schichtbestandteil enthalten, alternativ auch Polypropylen, EVA (Ethyl-Vinyl-Alkohol), EM(M)A, Ionomere oder Mischungen von diesen oder dergleichen enthalten.

Weiterhin ist bei einer bevorzugten Ausführungsform vorgesehen, daß Schichten, die einen Haftvermittler enthalten, ggf. einen Haftvermittler aufweisen, der auf PE, EVA, EM(M)A oder einem Ionomer als Grundstoff basiert.

Gemäß einer weiter bevorzugten Ausführungsform ist vorgesehen, daß Schichten, die einen Haftvermittler als Bestandteil aufweisen, alternativ ein Gemisch aus Polyolefin und Haftvermittler oder ein Gemisch aus EVA und/oder EM(M)A und Haftvermittler enthalten.

Entsprechend einer weiteren bevorzugten Ausführungsform ist vorgesehen, daß Schichten, die PVOH als Schichtbestandteil aufweisen, alternativ MXD6 (modifiziertes Polyamid) enthalten.

Gemäß einer weiter bevorzugten Ausführungsform der erfindungsgemäßen Nahrungsmittelhülle oder -folie ist vorgesehen, das Schichten, die Polyamid als Schichtbestandteil aufweisen, alternativ ein Ionomer enthalten.

Ferner ist gemäß einer bevorzugten Ausführungsform vorgesehen, daß Schichten, die Polyamid als Schichtbestandteil aufweisen, insbesondere MXD6 enthalten.

Nicht zuletzt ist gemäß einer bevorzugten Ausführungsform vorgesehen, daß Schichten, die Polyamid als Schichtbestandteil aufweisen, Polycaprolactam (PA6), Polyhexamethylenadipinamid (PA66), PA 6/66, PA 11, PA 12 oder Mischungen aus diesen Polyamiden oder dergleichen enthalten.

Ebenfalls ist eine weitere Ausführung bevorzugt, in der Schichten die Polyamid als Bestandteil aufweisen, alternativ Mischungen von PA und EVOH, bzw. PA und PVA oder PA und MXD6 enthalten.

Entsprechend einer weiteren bevorzugten Ausführung ist vorgesehen, daß Schichten die PVA oder MXD6 enthalten, alternativ Mischungen dieser Rohstoffe mit PA aufweisen.

Ein andere bevorzugte Ausführungsform sieht vor, daß die äußere PO-Schicht (3. Schicht von Außen) alternativ ein COC oder eine Mischung aus einem Polyolefin und einem COC enthält.

Weitere bevorzugte Ausführungsformen sehen vor, daß die äußere Schicht, welche PET enthält, alternativ PA, MXD6, PS, PMMA oder PC aufweist.

In einer weiterhin bevorzugten Ausführungsform ist die erfindungsgemäße Nahrungsmittelhülle oder -folie als Lebensmittelverpackung in Form eines Schrumpfbeutels, einer Siegelfolie, einer Einschlagfolie oder dergleichen ausgestaltet.

Mit der vorliegenden Erfindung wird damit erstmals eine flächen- oder schlauchförmige Nahrungsmittelhülle oder -folie mit einem wenigstens neunschichtigen Schichtaufbau vorgeschlagen, welche eine PVOH-Schicht als Sauerstoffbarriere besitzt, die symmetrisch zwischen zwei PA-Schichten für die Festigkeit eingebettet ist, welche wiederum symmetrisch von zwei PO-Schichten für die Wasserdampfbarriere umschlossen wird, und bei der die Außenschicht durch ein hochtemperaturbeständiges Material, wie PET, gebildet wird, welches neben den hervorragenden optischen Eigenschaften auch deutlich höhere Weiterverarbeitungsgeschwindigkeiten (Taktzahlen) ermöglicht, als diese bislang bekannt sind.

## Patentansprüche

1. Mehrschichtige, im Düsenblasverfahren hergestellte und im Tripple-Bubble-Verfahren biaxial verstreckbare, flächen- oder schlauchförmige Nahrungsmittelhülle oder -folie, insbesondere für Lebensmittelverpackungen, **gekennzeichnet durch** folgenden, von außen nach innen gezählten Schichtaufbau, mit wenigstens neun Schichten, wobei:
- eine erste Schicht von außen als Schichtbestandteil PET,
- eine zweite Schicht als Schichtbestandteil einen Haftvermittler,
- eine dritte Schicht als Schichtbestandteil ein Polyolefin, vorzugsweise Polyethylen,
- eine vierte Schicht als Schichtbestandteil Haftvermittler,
- eine fünfte Schicht als Schichtbestandteil Polyamid,
- eine sechste Schicht als Schichtbestandteil PVA (Polyvinylalkohol),
- eine siebte Schicht als Schichtbestandteil Polyamid,
- eine achte Schicht als Schichtbestandteil einen Haftvermittler, und
- eine neunte Schicht als Schichtbestandteil ein Polyolefin, vorzugsweise Polyethylen,
enthält.

2. Mehrschichtige, im Düsenblasverfahren hergestellte und im Tripple-Bubble-Verfahren biaxial verstreckbare, flächen- oder schlauchförmige Nahrungsmittelhülle oder -folie, insbesondere für Lebensmittelverpackungen, **gekennzeichnet durch** folgenden, von außen nach innen gezählten Schichtaufbau, mit wenigstens neun Schichten, wobei:
- eine erste Schicht von außen als Schichtbestandteil PET,
- eine zweite Schicht als Schichtbestandteil einen Haftvermittler,
- eine dritte Schicht als Schichtbestandteil ein Polyolefin, vorzugsweise Polyethylen,
- eine vierte Schicht als Schichtbestandteil Haftvermittler,
- eine fünfte Schicht als Schichtbestandteil Polyamid,
- eine sechste Schicht als Schichtbestandteil MXD6 (modifiziertes Polyamid 6),
- eine siebte Schicht als Schichtbestandteil Polyamid,
- eine achte Schicht als Schichtbestandteil einen Haftvermittler, und
- eine neunte Schicht als Schichtbestandteil ein Polyolefin, vorzugsweise Polyethylen,
enthält.

3. Nahrungsmittelhülle oder -folie nach Anspruch 1 oder 2, **dadurch gekennzeichnet, daß** Schichten, die PVA oder MXD6 aufweisen, alternativ Mischungen dieser Rohstoffe mit PA enthalten.

4. Nahrungsmittelhülle oder -folie nach einem der Ansprüche 1 bis 3, **dadurch gekennzeichnet, daß** Schichten, die ein Polyolefin, vorzugsweise Polyethylen, als Schichtbestandteil enthalten, alternativ auch weitere Polyolefine, Polypropylen, EVA, EM(M)A, Ionomere oder Mischungen von diesen oder dergleichen enthalten.

5. Nahrungsmittelhülle oder -folie nach einem der Ansprüche 1 bis 4, **dadurch gekennzeichnet, daß** Schichten, die einen Haftvermittler enthalten, einen Haftvermittler aufweisen, der auf PE, PP, EVA, EM(M)A oder einem Ionomer als Grundstoff basiert.

6. Nahrungsmittelhülle oder -folie nach einem der Ansprüche 1 bis 5, **dadurch gekennzeichnet, daß** Schichten, die einen Haftvermittler aufweisen alternativ ein Gemisch aus Polyolefin und Haftvermittler oder ein Gemisch aus EVA und/oder EM(M)A und Haftvermittler oder Ionomer und Haftvermittler, oder unterschiedliche Haftvermittler beziehungsweise Mischungen davon in den einzelnen Schichten enthalten.

7. Nahrungsmittelhülle oder -folie nach einem der Ansprüche 1 bis 6, **dadurch gekennzeichnet, daß** Schichten, die Polyamid als Schichtbestandteil aufweisen, alternativ Polycaprolactam (PA6), Polyhexamethylenadipinamid (PA66), PA6/66, PA11, PA 12 oder Mischungen aus diesen Polyamiden oder dergleichen enthalten.

8. Nahrungsmittelhülle oder -folie nach einem der Ansprüche 1 bis 7, **dadurch gekennzeichnet, daß** Schichten, die Polyamid als Schichtbestandteil aufweisen alternativ MXD6 enthalten.

9. Nahrungsmittelhülle oder -folie nach einem der Ansprüche 1 bis 8, **dadurch gekennzeichnet, daß** Schichten, die Polyamid als Schichtbestandteil aufweisen alternativ einen Ionomer enthalten.

10. Nahrungsmittelhülle oder -folie nach einem der Ansprüche 1 bis 9, **dadurch gekennzeichnet, daß** Schichten, die Polyamid als Schichtbestandteil aufweisen, alternativ Mischungen von PA und EVOH beziehungsweise PA und PVA oder PA und MXD6 enthalten.

11. Nahrungsmittelhülle oder -folie nach einem der Ansprüche 1 bis 10, **dadurch gekennzeichnet, daß** die dritte Schicht von außen alternativ ein COC oder eine Mischung aus COC und einem Polyolefin als Schichtbestandteil enthält.

12. Nahrungsmittelhülle oder -folie nach einem der Ansprüche 1 bis 11, **dadurch gekennzeichnet, daß** Schichten, die PET als Schichtbestandteil aufweisen, alternativ Polycaprolactam (PA6), Polyhexamethylenadipinamid (PA66), PA6/66, PA11, PA12 oder Mischungen aus diesen Polyamiden oder PS (Polystyrol) oder COC oder eine Mischung aus COC und einem Polyolefin oder ein Polyolefin, vorzugsweise PP oder HDPE, oder Mischungen von verschiedenen Polyolefinen oder PC (polycarbonat) oder PMMA oder MXD6 enthalten.

13. Nahrungsmittelhülle oder -folie nach einem der Ansprüche 1 bis 12, **dadurch gekennzeichnet, daß** diese als Lebensmittelverpackung in Form eines Schrumpfbeutels, einer Siegelfolie oder einer Einschlagfolie ausgestaltet ist.

## Claims

1. A multilayer sheet- or tube-type food casing or food film, in particular for food packagings, which is manufactured by a nozzle blast-drawing process and can be biaxially oriented by a triple-bubble process, **characterized by** the following layer structure including at least nine layers counted from the outside to the inside, wherein:
- a first layer from the outside contains PET as a layer component,
- a second layer contains an adhesion promoter as a layer component,
- a third layer contains a polyolefin, preferably polyethylene, as a layer component,
- a fourth layer contains adhesion promoter as a layer component,
- a fifth layer contains polyamide as a layer component,
- a sixth layer contains PVA (polyvinyl alcohol) as a layer component,
- a seventh layer contains polyamide as a layer component,
- an eighth layer contains adhesion promoter as a layer component, and
- a ninth layer contains a polyolefin, preferably polyethylene, as a layer component.

2. A multilayer sheet- or tube-type food casing or food film, in particular for food packagings, which is manufactured by a nozzle blast-drawing process and can be biaxially oriented by a triple-bubble process, **characterized by** the following layer structure including at least nine layers counted from the outside to the inside, wherein:
- a first layer from the outside contains PET as a layer component,
- a second layer contains an adhesion promoter as a layer component,
- a third layer contains a polyolefin, preferably polyethylene, as a layer component,
- a fourth layer contains adhesion promoter as a layer component,
- a fifth layer contains polyamide as a layer component,
- a sixth layer contains MXD6 (modified polyamide 6) as a layer component,
- a seventh layer contains polyamide as a layer component,
- an eighth layer contains adhesion promoter as a layer component, and
- a ninth layer contains a polyolefin, preferably polyethylene, as a layer component.

3. The food casing or food film according to claim 1 or 2, **characterized in that** layers which contain PVA or MXD6 alternatively contain blends of these ingredients with PA.

4. The food casing or food film according to any one of claims 1 to 3, **characterized in that** layers which contain a polyolefin, preferably polyethylene, as a layer component alternatively also contain further polyolefins, polypropylene, EVA, EM(M)A, ionomers or blends of these, or the like.

5. The food casing or food film according to any one of claims 1 or 4, **characterized in that** layers which contain an adhesion promoter include an adhesion promoter on the basis of PE, PP, EVA, EM(M)A or of an ionomer as a base material.

6. The food casing or food film according to any one of claims 1 through 5, **characterized in that** layers which contain an adhesion promoter alternatively contain a blend of polyolefin and adhesion promoter or a blend of EVA and/or EM(M)A and adhesion promoter or ionomer and adhesion promoter, or various adhesion promoters or blends thereof, in the single layers.

7. The food casing or food film according to any one of claims 1 through 6, **characterized in that** layers which contain polyamide as a layer component alternatively contain polycaprolactame (PA6), polyhexamethylene adipinamide (PA66), PA6/66, PA11, PA12, or blends of these polyamides or the like.

8. The food casing or food film according to any one of claims 1 through 7, **characterized in that** layers which contain polyamide as a layer component contain MXD6.

9. The food casing or food film according to any one of claims 1 through 8, **characterized in that** layers which contain polyamide as loayer component alternatively contain a ionomer.

10. The food casing or food film according to any one of claims 1 through 9, **characterized in that** layers which contain polyamide as layer component alternatively contain blends of PA and EVOH or PA and PVA or PA and MXD6.

11. The food casing or food film according to any one of claims 1 through 10, **characterized in that** the third layer from the outside alternatively contains COC or a blend of COC and a polyolefin as layer component.

12. The food casing or food film according to any one of claims 1 through 11, **characterized in that** layers which contain PET as layer component alternatively contain polycaprolactame (PA6), polyhexamethylene adipinamide (PA66), PA6/66, PA11, PA12, or blends of these polyamides or PS (polystyrene) or COC or a blend of COC and a polyolefin or a polyolefin, preferably PP or HDPE, or blends of various polyolefins or PC (polycarbonate) or PMMA or MXD6.

13. The food casing or food film according to any one of claims 1 through 12, **characterized in that** it is fashioned as food packaging having the form of a shrink bag, a sealable film, or a wrapping film.

## Revendications

1. Enveloppe ou feuille alimentaire multicouche, planiforme ou tubulaire produite dans un procédé d'étirage par soufflage et dans un procédé à triple bulle, étirable biaxialement, en particulier pour emballages alimentaires, **caractérisée par** la structure de couches suivante, comptées de l'extérieur vers l'intérieur, comportant au moins neuf couches, dans laquelle :
- une première couche comprend de l'extérieur, du PET en tant que composant de couche,
- une deuxième couche comprend un adhésif, en tant que composant de couche,
- une troisième couche comprend une polyoléfine, de préférence un polyéthylène en tant que composant de couche,
- une quatrième couche comprend un adhésif, en tant que composant de couche,
- une cinquième couche comprend du polyamide en tant que composant de couche,
- une sixième couche comprend du PVA (alcool polyvinylique) en tant que composant de couche,
- une septième couche comprend un polyamide en tant que composant de couche,
- une huitième couche comprend un adhésif en tant que composant de couche,
- une neuvième couche comprend une polyoléfine, de préférence un polyéthylène en tant que composant de couche.

2. Enveloppe ou feuille alimentaire multicouche, planiforme ou tubulaire produite dans un procédé d'étirage par soufflage et dans un procédé à triple bulle, étirable biaxialement, en particulier pour emballages alimentaires, **caractérisée par** la structure de couches suivante, comptées de l'extérieur vers l'intérieur, comportant au moins neuf couches, dans laquelle :
- une première couche comprend de l'extérieur, du PET en tant que composant de couche,
- une deuxième couche comprend un adhésif, en tant que composant de couche,
- une troisième couche comprend une polyoléfine, de préférence un polyéthylène en tant que composant de couche,
- une quatrième couche comprend un adhésif, en tant que composant de couche,
- une cinquième couche comprend du polyamide en tant que composant de couche,
- une sixième couche comprend du MXD6 (polyamide 6 modifié) en tant que composant de couche,
- une septième couche comprend un polyamide en tant que composant de couche,
- une huitième couche comprend un adhésif en tant que composant de couche, et
- une neuvième couche comprend une polyoléfine, de préférence un polyéthylène en tant que composant de couche.

3. Enveloppe ou feuille alimentaire selon la revendication 1 ou 2, **caractérisée en ce que** des couches qui présentent du PVA ou du MXD6 contiennent alternativement des mélanges de ces matières premières avec du PA.

4. Enveloppe ou feuille alimentaire selon l'une des revendications 1 à 3, **caractérisée en ce que** des couches qui contiennent une polyoléfine, de préférence du polyéthylène, en tant que composant de couche, contiennent alternativement également d'autres polyoléfines, polypropylènes, EVA, EM(M)A, ionomères ou mélanges de ceux-ci ou similaires.

5. Enveloppe ou feuille alimentaire selon l'une des revendications 1 à 4, **caractérisée en ce que** des couches qui contiennent un adhésif, présentent un adhésif qui est à base de PE, PP, EVA, EM(M)A ou un ionomère comme matière de base.

6. Enveloppe ou feuille alimentaire selon l'une des revendications 1 à 5, **caractérisée en ce que** des couches qui présentent un adhésif contiennent alternativement un mélange de polyoléfine et d'adhésif ou un mélange d'EVA et/ou d' EM (M) A et un adhésif ou un ionomère et un adhésif ou différents adhésifs ou mélanges de ceux-ci, dans les couches individuelles.

7. Enveloppe ou feuille alimentaire selon l'une des revendications 1 à 6, **caractérisée en ce que** des couches qui présentent du polyamide en tant que composant de couche, contiennent alternativement du polycaprolactame (PA6), du polyhexaméthylène-adipinamide (PA66), du PA6/66, du PA11, du PA12 ou des mélanges de ces polyamides ou similaires.

8. Enveloppe ou feuille alimentaire selon l'une des revendications 1 à 7, **caractérisée en ce que** des couches qui présentent du polyamide en tant que composant de couche contiennent alternativement du MXD6.

9. Enveloppe ou feuille alimentaire selon l'une des revendications 1 à 8, **caractérisée en ce que** des couches qui présentent du polyamide en tant que composant de couche contiennent alternativement un ionomère.

10. Enveloppe ou feuille alimentaire selon l'une des revendications 1 à 9, **caractérisée en ce que** des couches qui présentent du polyamide en tant que composant de couche contiennent alternativement des mélanges de PA et d'EVOH ou de PA et de PVA ou de PA et de MXD6.

11. Enveloppe ou feuille alimentaire selon l'une des revendications 1 à 10, **caractérisée en ce que** la troisième couche contient de l'extérieur, alternativement, un COC ou un mélange de COC et d'une polyoléfine comme composant de couche.

12. Enveloppe ou feuille alimentaire selon l'une des revendications 1 à 11, **caractérisée en ce que** des couches qui présentent du PET comme composant de couche, contiennent alternativement du polycaprolactame (PA6), du polyhexaméthylène-adipinamide (PA66), du PA6/66, du PA11, du PA12 ou des mélanges de ces polyamides ou du PS (polystyrène) ou du COC ou un mélange de COC et d'une polyoléfine ou une polyoléfine, de préférence de PP ou HDPE ou des mélanges de diverses polyoléfines ou de PC (polycarbonate) ou de PMMA ou de MXD6.

13. Enveloppe ou feuille alimentaire selon l'une des revendications 1 à 12, **caractérisée en ce qu'**elle est conçue comme un emballage alimentaire sous la forme d'un sac rétractable, d'une feuille à sceller ou d'une feuille de revêtement.
